Europäisches Patentamt

European Patent Office

Office européen des brevets

(11) Publication number: **0 447 723 A1**

# EUROPEAN PATENT APPLICATION

(21) Application number: 90314275.0

(22) Date of filing: 24.12.90

(51) Int. Cl.⁵: **F16L 33/22, F16L 37/08**

(30) Priority: 23.03.90 JP 74293/90
21.09.90 JP 253194/90

(43) Date of publication of application:
25.09.91 Bulletin 91/39

(84) Designated Contracting States:
BE DE FR GB IT

(71) Applicant: NITTA- MOORE CO., LTD.
1-8-12 Hommachi
Chuo-ku, Osaka(JP)

(72) Inventor: Inoue, Noboru
1765-2 Mise-cho
Kashihara-shi, Nara(JP)

(74) Representative: Barker, Rosemary Anne et al
c/o Mewburn Ellis, 2 Cursitor Street
London EC4A 1BQ(GB)

(54) **Pipe joint.**

(57) A pipe joint comprises a body (1) with both ends open, at least one of which is to be a pipe insertion port (10), a slender slidable cylinder (2) coaxially installed in the body (1) so as to slide therein in a certain range, its free end facing the pipe insertion port (10), and a holding cylinder (3) inserted between the main body (1) and the slidable cylinder (2) in such a manner to move freely back and forth. The main body (1) has a taper (11) diminishing toward the pipe insertion port (10). The holding cylinder (3) has a slit (30) open to the pipe insertion port (10) and an outside diameter slightly larger than the inside diameter of the pipe insertion port (10).

When a pipe H is forcibly fitted on the slidable cylinder (2) the holding cylinder (3) moves toward the pipe insertion port (10) along with the pipe being pulled back and the pressure of its abutment against the taper (11) results in secure connection.

For disconnection, the pipe is firstly pushed back inwardly of the body (1) so that the holding cylinder (3) no longer abuts the taper (11) A shaft (A) is then inserted through an opening (12) of the body (1) to engage a stopping part (31) of the holding cylinder (3) and thereby retain it while the pipe is drawn out and freed.

Fig. 4b

The present invention relates to a pipe joint for coupling piping.

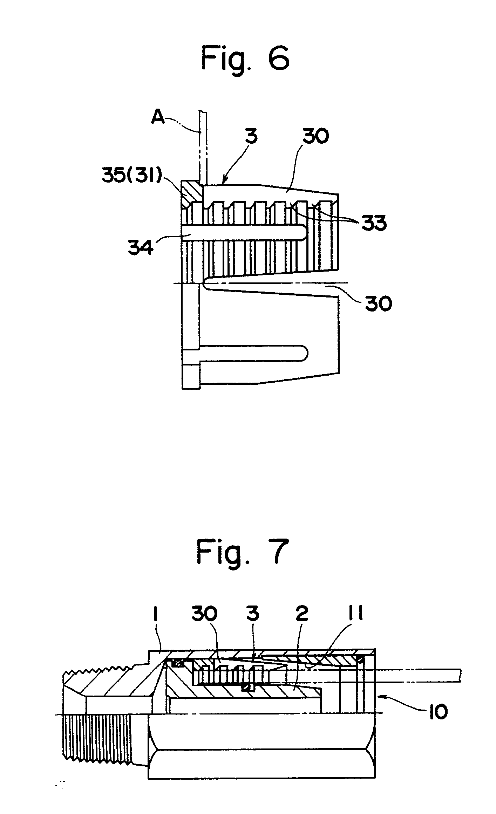

An example of a conventional pipe joint is shown in Fig. 7.

As shown in the drawing, this joint has a cylindrical main body 1 with a male threaded portion at one end, a slender cylinder 2 slidably and coaxially installed therein, and a holding cylinder 3 placed between the slender slidable cylinder 2 and the main body 1 so as to be slidable to and fro. A pipe inserted between the slidable cylinder 2 and the holding cylinder 3 is gripped between them in a non-detachable manner.

The main body 1, as shown in the drawing, has a pipe insertion port 10 at the other end, and a tapering inner surface 11 narrowing toward this pipe insertion port 10.

The holding cylinder 3 is made of elastic/resilient material and has a slit 30 opening toward the pipe insertion port 10 in its circumferential wall, and, as shown in the drawing, its outside diameter is slightly larger than the diameter of the pipe insertion port 10.

The space between the holding cylinder 3 and the slidable cylinder 2 is set slightly smaller than the wall thickness of a pipe to be connected to them. Therefore, when a pipe is inserted forcibly into the space between the holding cylinder 3 and the slidable cylinder 2 and then pulled back through the pipe insertion port 10, the holding cylinder 3 and the slidable cylinder 2 will move toward the pipe insertion port together with the pipe. Once the holding cylinder 3 abuts against the tapering surface 11, pressure is exerted by the tapering surface 11 on the holding cylinder 3 in a direction to reduce its diameter. As a consequence, the gripping force by which the holding cylinder 3 and the slidable cylinder 2 retain the pipe increases, so that the pipe is securely held.

As mentioned, with this type of pipe joint, connection is only achieved by inserting a pipe through the insertion port 10 and then pulling it back.

However, this pipe joint has a disadvantage in that once the pipe is connected in this way it cannot be detached therefrom.

In these circumstances, an object of the present invention is to provide a pipe joint of the above type from which a pipe can easily be disconnected after being connected thereto.

To achieve the above object the invention provides a pipe joint comprising a substantially cylindrical main body with both ends open, at least one of which is a pipe insertion port, a slidable cylinder coaxially installed in the main body so as to slide therein in a specific range, its free end facing the pipe insertion port, and a holding cylinder inserted between the main body and the slidable cylinder in a manner to move freely to and fro, the main body having a tapering inner surface portion diminishing toward the pipe insertion port and the holding cylinder having a slit open toward the pipe insertion port and an outside diameter which is larger than the inside diameter of the pipe insertion port, characterised in that the main body has a penetration opening in its wall through which a shaft can be inserted, and the holding cylinder has stop means with which the shaft can engage when it is inserted into the opening in a state where the holding cylinder is not abutting against the tapering surface.

In most embodiments when a pipe is forcibly fitted externally onto the slidable cylinder the holding cylinder is capable of moving toward the pipe insertion port along with the pipe when the latter is pulled back.

In some embodiments this occurs because the space between the slidable cylinder and the holding cylinder is slightly smaller than the wall thickness of a pipe to be inserted therebetween. However, in other embodiments it may be achieved by the diameter of the slidable cylinder being larger than the inside diameter of a pipe to be inserted therein with a stopping member provided for pressing the holding cylinder in the same direction as and along with the slidable cylinder toward the pipe insertion port.

In some embodiments the shaft may conveniently be mounted onto the body and spring-biased outwardly in the radial direction of the body with its inner end confronting the stopping part of the holding cylinder.

The pipe joint of the invention has the advantage of being easy to detach as well as being easy to couple to piping.

To remove a connected pipe from such a pipe joint, first of all the connected pipe is pushed inward to release the engagement between the holding cylinder and the internal taper of the body and the consequent pressing force on the holding cylinder. The gripping force on the pipe by the slidable cylinder and the holding cylinder is then reduced just to the elastic restoring force of the holding cylinder. In this state where the holding cylinder is no longer in contact with the internal taper, the shaft is inserted through the penetration opening so as to engage the stopping part. This prevents movement of the holding cylinder toward the pipe insertion port when the pipe is again pulled back. Since the gripping force by the holding cylinder and the slidable cylinder is not then increased, the connected pipe is simply drawn out.

In an embodiment with a spring biassed shaft, as mentioned above, pressing the outer end of the shaft with sufficient force to overcome the spring bias causes its inner end to engage with the stopping part of the holding cylinder, and when the pressing force is released, the spring bias returns the shaft to the position where its inner end is aligned with but slightly spaced from the stopping part.

Therefore, by pressing the shaft inward, in the same way as by inserting the shaft as just described, movement of the holding cylinder toward the pipe insertion port is blocked. Hence not only connection but also removal of piping may be achieved easily by employing the pipe joint of the present invention.

In cases where the shaft is provided on the body loss of the shaft may be avoided.

Other features and benefits of the invention may emerge from the following detailed description, referring to the accompanying drawings, in which:

Fig. 1 is a semisectional view of an embodiment of the pipe joint of the present invention;

Fig. 2 is a semisectional view of a holding cylinder used in the same pipe joint;

Fig. 3 shows a pipe connected to the pipe joint of Fig. 1;

Fig. 4a, 4b and 4c are explanatory drawings showing removal of a connected pipe from the pipe joint;

Fig. 5 is a semisectional view of another embodiment of the pipe joint of the present invention;

Fig. 6 is a semisectional view of a holding cylinder in another embodiment of the pipe joint of the invention;

Fig. 7 is a semisectional view of a conventional pipe joint; and

Fig. 8 and 9 are sectional views of other embodiments of pipe joints of the present invention.

Referring now to the drawings, some of the embodiments of the invention are described in detail below.

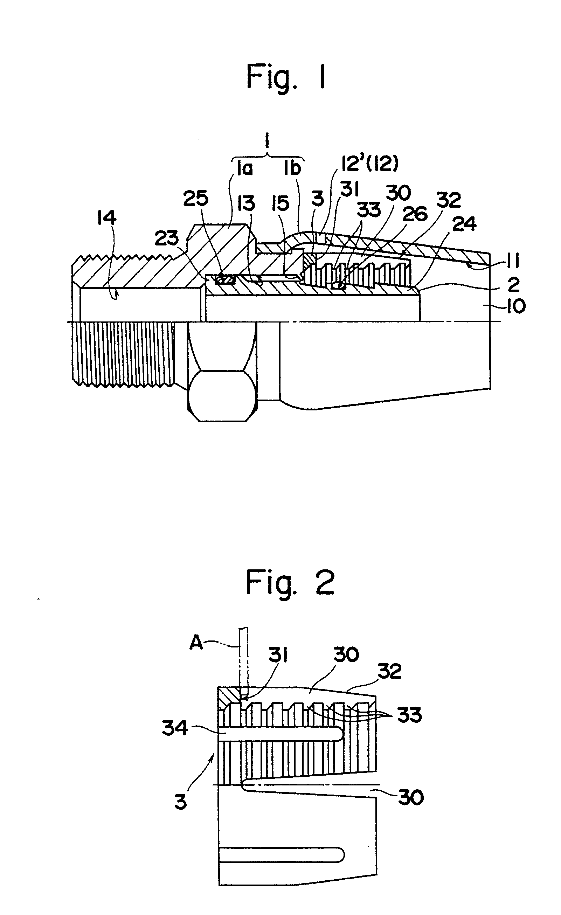

The pipe joint embodiment shown in Fig. 1 comprises a generally cylindrical main body 1 with both ends open, a slender slidable cylinder 2 coaxially installed in the main body 1 so as to slide freely in a specific range, and a holding cylinder 3 placed between the main body 1 and the slidable cylinder 2 so as to move freely to and fro.

The main body 1, as shown in Fig. 1 consists of a socket 1b caulked on one end of a nipple 1a, and the free, front end part of the socket 1b forms a pipe insertion port 10.

The nipple 1a, as shown in Fig. 1, has its inner circumferential surface composed of a large diameter bore 13 and a small diameter bore 14, and the large diameter bore 13 has an inward protuberance 15 at its end connected to the socket 1b.

The socket 1b has a uniform wall thickness, and diminishes in diameter toward its free end to form a tapering inner surface portion 11 near the pipe insertion port 10. Near the caulking area a hole 12' is provided in the circumferential wall of the socket 1b to receive a shaft A. This hole 12' constitutes a penetration opening and is not limited to a circular form. This hole 12' is formed at a location of the socket 1b which is substantially in alignment with the end part of the slit 30 of the holding cylinder 3, when the latter is in its rearward position. As an alternative to the hole 12' the penetration opening 12 may be either a circumferential slot or a slit open toward the pipe insertion port 10.

As shown in Fig. 1 the slender slidable cylinder 2 has at one end a large diameter part 23 the diameter of which is slightly smaller than the large diameter bore 13 of the nipple 1a. At the other end it has a small diameter part 24 on which a pipe is to be externally fitted. The slidable cylinder 2 is installed in the nipple 1a in such a way that the large diameter part 23 is arranged in the large diameter bore 13. This slidable cylinder 2 is designed to slide back and forth in a range between the stepped junction between the large diameter bore 13 and the small diameter bore 14, and the inward protuberance 15.

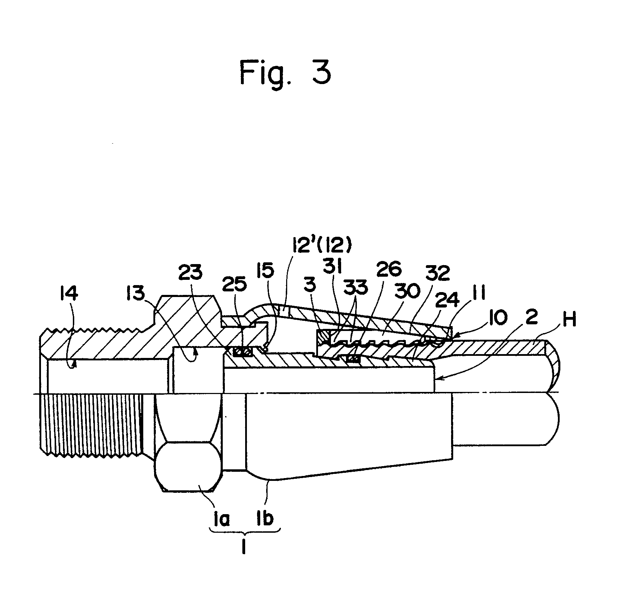

The large diameter part 23 has a groove 25 around its outer circumference in which an O-ring is located to maintain airtightness between the large diameter part 23 of the slidable cylinder 2 and the large diameter bore 13 of the nipple 1a. The small diameter part 24 also has a groove 26 on its outer circumference, in which a further O-ring is located. As shown in Fig. 3, when a pipe H is held between the slidable cylinder 2 and the holding cylinder 3, airtightness between the inner circumference of the pipe H and the outer circumference of the slidable cylinder 2 is maintained with the aid of the latter O-ring.

The holding cylinder 3 is made of elastic synthetic resin, and as shown in Figs. 1 and 2, its outside diameter is slightly larger than the diameter of the pipe insertion port 10. A taper 32, corresponding to the aforementioned tapering inner surface portion 11 of the socket 1b, is provided on the outer circumference of the cylinder 3 facing the pipe insertion port 10. A plurality of ridges 33 are provided on the inner surface of the holding cylinder 3. Additionally, slits 30 open to one end and slits 34 open to the other end are alternately provided in the wall of the holding cylinder 3.

In this embodiment, with the slidable cylinder 2 and the holding cylinder 3 mounted in the main body 1 as shown in Fig. 1, the space between the slidable cylinder 2 and the holding cylinder 3 is slightly smaller than the wall thickness of the pipe H to be inserted therein, shown in Fig. 3.

When the pipe H is inserted through the pipe insertion port 10 of the main body 1 and by force between the slidable cylinder 2 and the holding cylinder 3 a gripping force acts on the pipe due to the elastic restoring force of the holding cylinder 3. In this state, when the pipe H is pulled back it is gripped with a strong force by the pawl-like ridges 33 of the holding cylinder 3 and by the outer surface of the slidable cylinder 2, and the ridges 33 bite into the outer surface of the pipe as shown in Fig. 3. Therefore, once connected, the pipe H will not be removed inadvertently or accidently from the pipe joint.

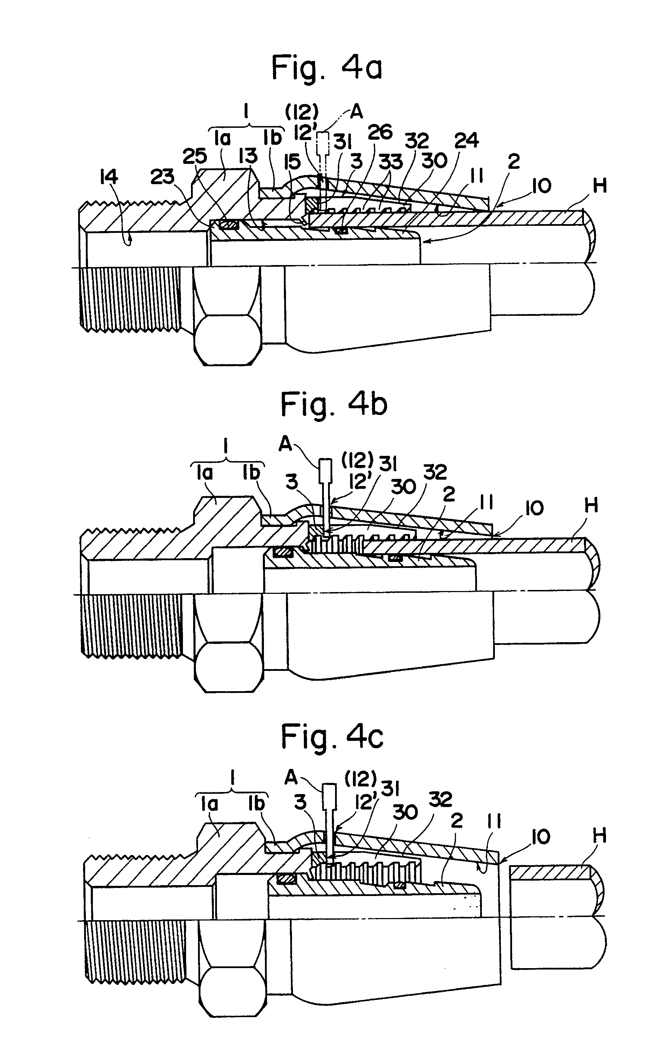

In order to detach the pipe H, the pipe H in the foregoing state is firstly pushed in. Along with the pipe H, the slidable cylinder 2 and the holding cylinder 3 are pushed in together to the position shown in Fig. 4a. In this position the engagement of the taper 32 of the holding cylinder 3 with the tapering inner surface 11 of the socket 1b is released, and the gripping force on the pipe H by the holding cylinder 3 and the slidable cylinder 2 consists of only the elastic restoring force of the holding cylinder 3.

Next, with the components in this position the shaft A is inserted through the hole 12' provided in the socket 1b as indicated by double dot line in Fig. 4a, and its end part is inserted into the end part of the slit 30 in the holding cylinder 3. When the pipe H is then pulled, the holding cylinder 3 is held back due to the engagement of the constituent end part of the slit 30 and the inserted shaft A. Hence, as shown in Figs. 4b and 4c, the pipe H may be detached by resisting the small gripping force exerted by the holding cylinder 3 and the slidable cylinder 2, which is no more than the small elastic restoring force of the holding cylinder 3. In this embodiment the end wall of the slit 30 constitutes the stopping part 31 mentioned in the claims.

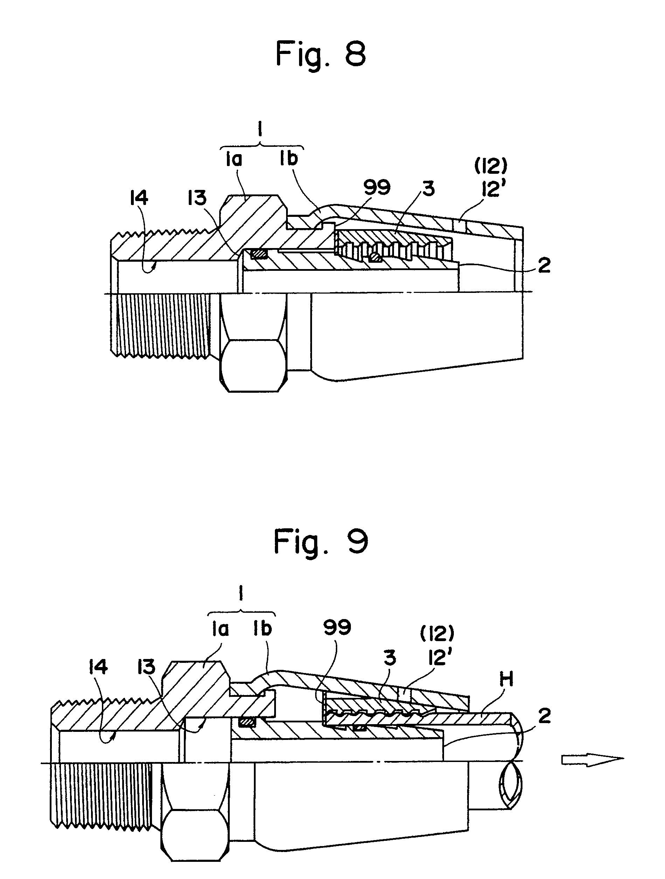

In the foregoing embodiment, the invention is applied to a pipe joint in which the space between the slidable cylinder 2 and the holding cylinder 3 is slightly smaller than the wall thickness of the pipe H. However, as shown in Fig. 8 and Fig. 9, the invention may be also applied to a pipe joint in which the outside diameter of the slidable cylinder 2 is larger than the inside diameter of the pipe to be inserted therein, and a stopping member 99 is disposed so as to press the holding cylinder 3 in the same direction along with the movement of the slidable cylinder 2 toward the pipe insertion port 10.

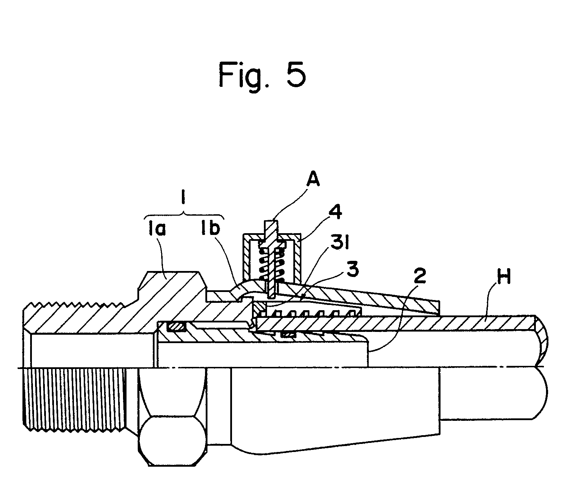

Another embodiment of the invention is described by reference to Fig. 5. The joint of this embodiment has a casing 4 disposed on the outer surface of the socket 1b, and a shaft A mounted therein which is spring-loaded outward in the radial direction. One end of the shaft A projects through the outermost wall of the casing 4, while the other end is inserted through a hole 12' of the socket 1b.

With no pressure on its end projecting from the casing 3, as shown in Fig. 5, this shaft A is positioned so that its other inner end confronts the outside of the holding cylinder 3. When pressure is applied to the shaft A to overcome the spring force, its inner end is inserted into the end portion of the slit 30 of the holding cylinder 3.

In this embodiment, also, the stopping part 31 formed in the holding cylinder 3 is constituted by the end wall of the slit 30. However, it is not limited thereto in other embodiments. Separate from the slit 30, a through hole or a dent may be formed in the holding cylinder 3 as the stopping part 31, and the end edge of the holding cylinder 3 may also be used as the stopping part 31. Furthermore, as shown in Fig. 6, an outer projecting flange 35 may be disposed on the holding cylinder 3 as the stopping part 31. In this case, even if the holding cylinder 3 rotates relatively within the socket 1b, the outer projecting flange 35 securely functions as the stopping part 31.

Incidentally, in the pipe joint embodiments described herein a thread structure is employed as connecting means at the opposite end to the pipe insertion port. However, the invention is not limited thereto, and other connecting means may alteratively be employed.

## Claims

1. A pipe joint comprising a substantially cylindrical main body (1) with both ends open, at least one of which is a pipe insertion port (10), a slidable cylinder (2) coaxially installed in the main body (1) so as to slide therein in a specific range, its free end facing the pipe insertion port (10), and a holding cylinder 3 inserted between the main body 1 and the slidable cylinder 2 in a manner to move freely to and fro (1), the main body having a tapering inner surface portion 11 diminishing toward the pipe insertion port (10) and the holding cylinder (3) having a slit (30) open toward the pipe insertion port (10) and an outside diameter which is larger than the inside diameter of the pipe insertion port (10), characterised in that the main body 1 has a penetration opening (12) in its wall through which a shaft (A) can be inserted, and the holding cylinder (3) has stop means (31) with which the shaft can engage when it is inserted into the opening (12) in a state where the holding cylinder (3) is not abutting against the tapering surface (11).

2. A pipe joint according to claim 1 wherein when a pipe is forcibly fitted externally, onto the slidable cylinder (2), the holding cylinder (3) is capable of moving toward the pipe insertion port (1) along with the pipe, when the latter is pulled back.

3. A pipe joint according to claim 1 wherein the space between the slidable cylinder (2) and the holding cylinder (3) is slightly smaller than the wall thickness of a pipe to be inserted therebetween.

4. A pipe joint according to claim 1 wherein the diameter of the slidable cylinder (2) is larger than the inside diameter of a pipe to be inserted therein and a stopping member is provided for pressing the holding cylinder (3) in the same direction as the slidable cylinder (2) toward the pipe insertion port (10).

5. A pipe joint according to any preceding claim, wherein the shaft (A) is mounted onto the body and is spring-biassed outwardly in the radial direction of the main body 1, and its inner end lies adjacent the stopping part 31 of the holding cylinder 3.

6. A pipe joint according to any preceding claim, wherein the stopping part (31) is a through hole..

7. A pipe joint according to any of claims 1 to 5, wherein the stopping part (31) is a dent.

8. A pipe joint according to any of claims 1 to 5, wherein the stopping part (31) is an end portion of the slit (30).

9. A pipe joint according to any of claims 1 to 5, wherein the stopping part (31) is an outward proojecting piece.

10. A pipe joint according to any of claims 1 to 5, wherein the stopping part (31) is an end edge of the holding cylinder (3).

11. A pipe joint according to any preceding claim, wherein a taper (32) corresponding to the tapering inner surface portion (11) of the main body (1) is provided on the outer surface of the holding cylinder (3).

12. A pipe joint according to any preceding claim, wherein the penetration opening (12) is a slender slot in the circumferential direction of the main body (1).

13. A pipe joint according to any of claims 1 to 11 wherein the penetration opening 12 is a slit open toward the pipe insertion port (10).

14. A pipe joint according to any preceding claim wherein the holding cylinder (3) is made of elastic synthetic resin.

# Fig. 1

# Fig. 2

# Fig. 3

# Fig. 4a

# Fig. 4b

# Fig. 4c

# Fig. 5

# Fig. 6

A
3
30
35(31)
34
33
30

# Fig. 7

1
30
3
2
11
10

EP 0 447 723 A1

## Fig. 8

## Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 310 234   (BRIDGESTONE FLOWTECH CORPORA-TION)<br>* abstract; figure 1 * | 1-6,11 | F 16 L 33/22<br>F 16 L 37/08 |
| Y | US-A-2 182 797   (DILLON)<br>* page 3, left-hand column, line 73 - right-hand column, line 46; figures 10, 11, 13, 16 * | 1-6,11 | |

TECHNICAL FIELDS
SEARCHED (Int. Cl.5)

F 16 L

The present search report has been drawn up for all claims

| Place of search | Date of completion of search | Examiner |
|---|---|---|
| The Hague | 24 June 91 | HUBEAU M.G. |

CATEGORY OF CITED DOCUMENTS

X : particularly relevant if taken alone
Y : particularly relevant if combined with another
   document of the same category
A : technological background
O : non-written disclosure
P : intermediate document
T : theory or principle underlying the invention

E : earlier patent document, but published on, or after
   the filing date
D : document cited in the application
L : document cited for other reasons

&: member of the same patent family, corresponding
   document